# FASCICULE DE BREVET EUROPEEN

(11) **EP 0 441 722 B1**
(45) Date de publication et mention de la délivrance du brevet: **02.11.1994**
(21) Numéro de dépôt: 91420034.0
(22) Date de dépôt: 04.02.1991
(51) Int. Cl.: H02H 9/04, H01H 71/62

(54) **Parafoudre déconnectable pour réseau à basse tension**
Abtrennbarer Überspannungsableiter für Niederspannungsnetz
Disconnectable surge arrestor for low voltage power distribution network

(30) Priorité: 08.02.1990 FR 9001591
(43) Date de publication de la demande: 14.08.1991
(73) Titulaire: MERLIN GERIN, F-38240 Meylan (FR)
(72) Inventeur: Bonniau, Michel, F-38050 Grénoble Cédex (FR); Chatelet, Jacques, F-38050 Grénoble Cédex (FR); Aubelis, Patrick, F-38050 Grénoble Cédex (FR)
(74) Mandataire: Hecké, Gérard

(56) Documents cités:
- EP-A- 0 350 477
- DE-U- 8 025 215
- FR-A- 2 545 999
- US-A- 2 162 534

## Description

L'invention est relative à un parafoudre logé dans un boîtier isolant renfermant un limiteur de surtension à éléments non linéaires variables avec la tension, un dispositif de déconnexion à contacts actionnés par un mécanisme à manette, laquelle est déplaçable entre une position de déclenchement et une position d'enclenchement correspondant respectivement à l'état ouvert et à l'état fermé des contacts, un circuit de déclenchement coopérant avec le mécanisme pour provoquer le déplacement des contacts du dispositif de déconnexion vers l'état ouvert en cas de destruction du limiteur de surtension en fin de vie desdits éléments non linéaires, et des bornes de branchement du parafoudre entre le réseau et la terre, le réarmement du mécanisme étant inhibé après déconnexion du parafoudre suite à un déclenchement automatique.

Selon le parafoudre décrit dans le document EP 130851, la commande du mécanisme est inaccessible pour interdire tout réenclenchement en cas de destruction des varistances. La livraison du parafoudre s'effectue obligatoirement dans l'état enclenché, le mécanisme étant armé, et les contacts fermés. Le déclencheur est néanmoins sensible à des chocs mécaniques engendrés lors du transport ou du raccordement du parafoudre. Il peut en résulter un déclenchement intempestif du parafoudre neuf, et une ouverture des contacts sans possibilité de réarmement du mécanisme. Le parafoudre est alors inutilisable.

L'objet de l'invention consiste à réaliser un parafoudre déconnectable insensible aux chocs mécaniques, et en bon état de marche lors de la mise en service.

Le parafoudre selon l'invention est caractérisé en ce que la manette coopère avec un capot pour être accessible en position de déclenchement et inaccessible en position d'enclenchement, autorisant la livraison du parafoudre dans l'état armé du mécanisme et en position de déclenchement de la manette, et que le mécanisme comporte des moyens de mémorisation du déclenchement automatique rendant la déconnexion irréversible par maintien des contacts dans l'état ouvert en cas de tentative de réarmement du mécanisme par la manette.

Le circuit de déclenchement est doté d'un détecteur différentiel associé à un relais à haute sensibilité, dont la palette est verrouillée par le mécanisme dans l'état armé, la mise en service du parafoudre s'opérant après raccordement des bornes, par déplacement de la manette de la position de déclenchement vers la position d'enclenchement, provoquant le déverrouillage de ladite palette du relais.

Pour mémoriser le déclenchement automatique lors d'une déconnexion irréversible, il suffit de supprimer le ressort de rappel de l'une des pièces de transmission pour maintenir le mécanisme dans un état désarmé empêchant tout réarmement manuel après déclenchement automatique.

Le capot est agencé sur la face avant du boîtier isolant, et comporte une lumière de débattement de la manette, cette dernière étant engagée sous le capot en position d'enclenchement pour interdire toute déconnexion manuelle du parafoudre en l'absence de déclenchement par le relais.

D'autres avantages et caractéristiques ressortiront plus clairement de la description suivante d'un mode de réalisation de l'invention, donné à titre d'exemple non limitatif et représenté aux dessins annexés, dans lesquels:
- la figure 1 représente le schéma électrique du parafoudre déconnectable branché entre le réseau et la terre;
- la figure 2 montre le schéma du mécanisme de commande du parafoudre;
- la figure 3 est une vue en coupe du parafoudre représenté en position de déclenchement de la manette.

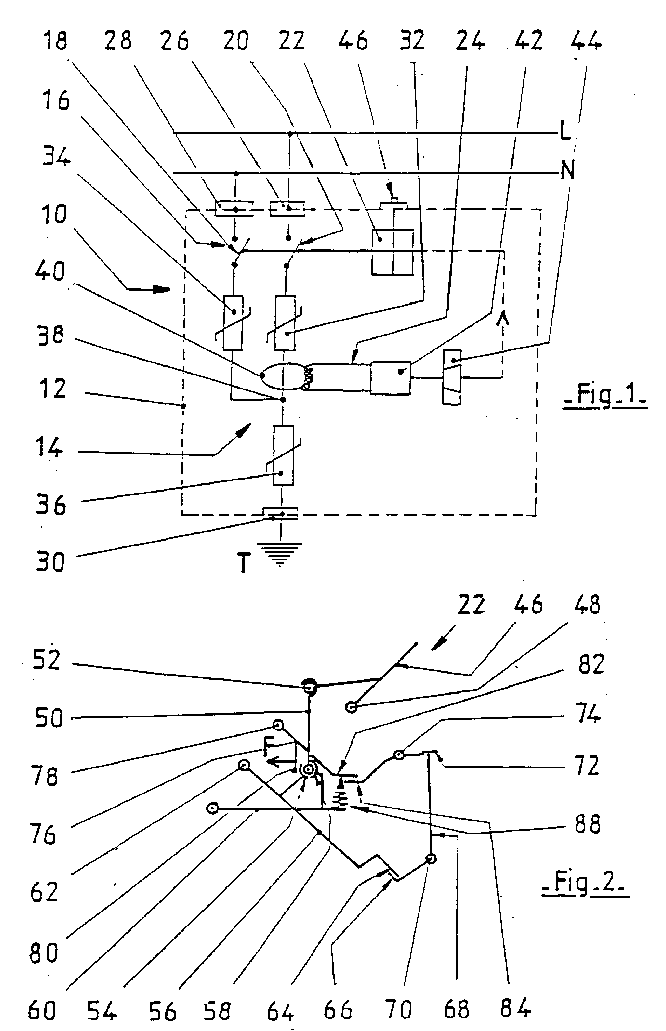

Sur les figures, un parafoudre 10 déconnectable est destiné à protéger une installation électrique ou un réseau de distribution à basse tension contre les effets de surtensions d'origine externe ou interne. La figure 1 montre l'exemple d'un parafoudre 10 unipolaire et neutre raccordé à un réseau monophasé ayant un conducteur de phase L, et un conducteur de neutre N, mais l'invention s'applique également à un parafoudre multipolaire. Le parafoudre 10 est logé dans un boîtier 12 isolant renfermant un limiteur de surtension 14 à éléments non linéaires variables avec la tension, un dispositif de déconnexion 16 à contacts 18,20 actionnés par un mécanisme 22, et un circuit de déclenchement 24 coopérant avec le mécanisme 22 pour commander la mise hors service du parafoudre 10 en fin de vie du limiteur de surtension 14. Un tel appareil de protection est décrit en détail dans le document EP-A-130851. Le boîtier 12 est doté de trois bornes 26,28,30 de connexion raccordées respectivement aux conducteurs de phase L, de neutre N, et à la terre T pour assurer un montage en parallèle du parafoudre 10 entre le réseau et la terre T.

Le limiteur de surtension 14 comporte trois varistances 32,34,36 connectées en étoile à point commun 38 pour autoriser une triple limitation de surtensions entre neutre et phase, entre neutre et terre, et entre phase et terre. Les varistances 32,34,36 sont insérées entre le point milieu 38 et respectivement le contact 20, le contact 18, et la borne 30 de la terre T.

Les deux contacts 18,20 du dispositif de déconnexion 16 sont électriquement intercalés entre les varistances 34,32 et les bornes 28,26.

Le circuit de déclenchement 24 comporte un détecteur différentiel 40 entourant un conducteur entre le point commun 38 et la varistance 32, un circuit de traitement 42 du signal issu du détecteur 40 et un relais 44 de déclenchement du mécanisme 22. Le relais 44 à haute sensibilité est du type décrit dans le document FR-A-2630256.

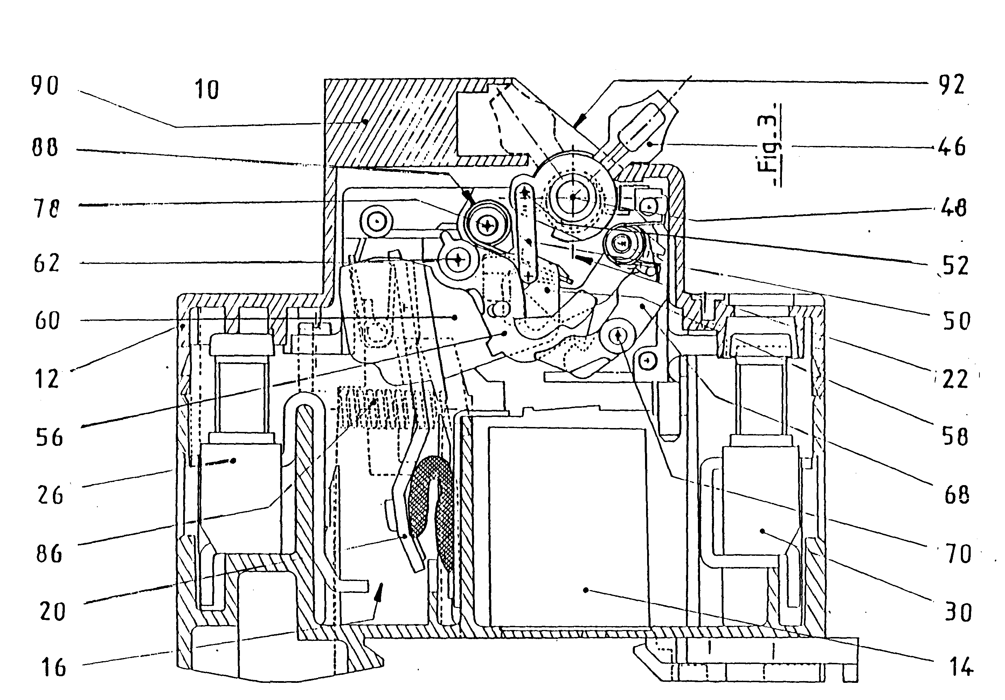

Le mécanisme 22 (figures 2 et 3) d'actionnement des contacts 18,20 du dispositif de déconnexion 16 est similaire à celui d'un interrupteur différentiel, décrit à titre d'exemple dans la demande de brevet français n° 8816593. Le mécanisme 22 est équipé d'une manette 46 montée à pivotement sur un axe 48 entre une position d'enclenchement (en pointillé sur figure 3) et une position de déclenchement (en traits pleins), correspondant respectivement à la fermeture et l'ouverture des contacts 18,20. Une biellette 50 de transmission est accouplée à la manette 46 en un point excentré consistuant l'axe 52 d'articulation d'une genouillère.

A l'opposé de l'axe 52, la biellette 50 coopère avec une première butée d'appui 54 solidaire d'un levier d'accrochage 56, et une deuxième butée d'appui 58 assujettie au barreau 60 de commutation entraînant les contacts 18,20. Le levier d'accrochage 56 est monté à pivotement sur un axe 62 entre une position armée et une position désarmée, et comporte un bec 64 de maintien susceptible de coopérer avec un nez 66 de retenue d'un verrou 68.

Le verrou 68 est monté à rotation limitée sur un axe 70 entre une position verrouillée et une position déverrouillée, et coopère avec une demi-lune 72 articulée sur un axe 74.

Un levier de déclenchement 76 est monté à pivotement sur un axe 78 entre une position de travail d'excitation du relais 44, et une position de repos de non déclenchement. Une première branche 80 de commande du levier de déclenchement 76 est susceptible d'être actionnée par le percuteur du relais 44 (voir flêche F sur figure 2), dont la bobine est excitée lors de la destruction des varistances 32,34,36. Le levier de déclenchement 76 comporte une deuxième branche de commande 82 coopérant avec une patte 84 de la demi-lune 72, de manière à déverrouiller le verrou 68 lors du déclenchement du relais 44.

Le mécanisme 22 est doté de trois étages de démultiplication agencés entre le relais 44 et le barreau de commutation 60.

Un premier ressort de rappel 86 (figure 3) sollicite le barreau 60 de commutation vers la position d'ouverture des contacts 18,20, lorsque l'une des butées 54,58 libère l'extrémité inférieure de la biellette 50.

Un deuxième ressort de rappel 88 sollicite le levier de déclenchement 76 vers la position de repos, notamment lors d'un réarmement automatique du relais 44 après ouverture des contacts 18,20.

Dans les deuxième et troisième étages du mécanisme 22, l'un des ressorts de rappel du verrou 68, de la demi-lune 72 et du levier d'accrochage 56 est supprimé, ce qui empêche tout réarmement du mécanisme 22 par la manette 46 après déclenchement automatique par le relais 44. L'inhibition de la refermeture des contacts 18,20 provient de la conservation en mémoire de la déconnexion.

La face avant du boîtier 12 comporte un capot 90 (figure 3) ayant une lumière 92 de débattement de la manette 46. En position d'enclenchement (représentée en pointillé), la manette 46 est engagée sous le capot 90, ce qui interdit toute déconnexion manuelle du parafoudre 10 en l'absence de déclenchement par le relais 44. Dans la position de déclenchement (traits pleins), la manette 46 est accessible.

Le fonctionnement et la mise en oeuvre du parafoudre 10 selon les figures 1 à 3 sont les suivants:

La livraison du parafoudre 10 s'effectue en position de déclenchement de la manette 46. Les contacts 18,20 sont ouverts, et le relais 44 se trouve dans l'état armé, avec maintien de sa palette dans la position d'attraction due à l'action de réarmement de la première branche 80 de commande. Les trois liaisons mécaniques du mécanisme 22 entre la deuxième branche 82 de commande, la demi-lune 72, le verrou 68 et le levier d'accrochage 56 sont également armées et l'effet de frottement au niveau des liaisons est suffisant pour maintenir cet état. Tout choc mécanique lors du transport ou du raccordement est alors sans effet sur l'état armé du mécanisme 22.

La mise en service du parafoudre 10 est effectuée par l'installateur après raccordement des bornes 26,28,30. La manette 46 est déplacée par pivotement de la position de déclenchement (traits pleins) vers la position d'enclenchement (en pointillé), où elle disparaît sous la capot 90. Les contacts 18,20 sont fermés, et la manette 46 n'est plus accessible, ce qui empêche toute déconnexion manuelle du parafoudre 10. La palette du relais 44 est alors déverrouillée, et prête à intervenir en cas d'excitation de la bobine de commande du relais 44.

Lors du fonctionnement normal du parafoudre 10, les varistances 32,34,36 du limiteur de surtension 14 assurent une protection efficace contre les surtensions en mode commun et différentiel. Le seuil et le temps de réponse de déclenchement du circuit de traitement 42 associé au détecteur 40 est choisi pour laisser passer des faibles courants de fuite ainsi que les courants transitoirs s'écoulant en fonctionnement normal.

Le courant de fuite important apparaissant lors de la destruction des varistances 32,34,36 en fin de vie provoque le déclenchement automatique instantané du mécanisme 22, après l'action de déverrouillage provoquée par le relais 44 sur la première branche 80 de la commande. L'ouverture des contacts 18,20 déconnecte le parafoudre 10 du réseau, et la manette 46 se trouve en position de déclenchement. Le relais 44 est réarmé automatiquement, mais l'une des autres liaisons mécaniques du mécanisme 22 reste déverrouillée en permanence due à l'absence du ressort de rappel. Il en résulte une mise en mémoire de la déconnexion, qui empêche tout réarmement du mécanisme 22 par la manette 46. En cas de tentative de pivotement de la manette 46 vers la position d'enclenchement, les contacts restent ouverts en permanence, et le relâchement de la manette 46 la ramène automatiquement vers la position de déclenchement.

L'agencement du mécanisme 22 permet une mise en service au moment de l'installation, et une déconnexion irréversible du parafoudre 10 en cas de destruction du limiteur de surtension 14.

Selon une variante (non représentée), on peut remplacer le détecteur différentiel 40 par un déclencheur électromagnétique associé à un mécanisme de disjoncteur. Le déclencheur électromagnétique est dimensionné pour être insensible aux décharges transitoires dans les varistances du limiteur de surtension 14.

## Revendications

1. Parafoudre logé dans un boîtier (12) isolant renfermant un limiteur de surtension (14) à éléments non linéaires variables avec la tension, un dispositif de déconnexion (16) à contacts (18,20) actionnés par un mécanisme (22) à manette (46), laquelle est déplaçable entre une position de déclenchement et une position d'enclenchement correspondant respectivement à l'état ouvert et à l'état fermé des contacts (18,20), un circuit de déclenchement (24) coopérant avec le mécanisme (22) pour provoquer le déplacement des contacts (18,20) du dispositif de déconnexion (16) vers l'état ouvert en cas de destruction du limiteur de surtension (14) en fin de vie desdits éléments non linéaires,et des bornes (26,28,30) de branchement du parafoudre (10) entre le réseau et la terre, le réarmement du mécanisme (22) étant inhibé après déconnexion du parafoudre (10) suite à un déclenchement automatique, caractérisé en ce que la manette (46) coopère avec un capot (90) pour être accessible en position de déclenchement et inaccessible en position d'enclenchement, autorisant la livraison du parafoudre (10) dans l'état armé du mécanisme (22) et en position de déclenchement de la manette (46), et que le mécanisme (22) comporte des moyens de mémorisation du déclenchement automatique rendant la déconnexion irréversible par maintien des contacts (18,20) dans l'état ouvert en cas de tentative de réarmement du mécanisme (22) par la manette (46).

2. Parafoudre selon la revendication 1, caractérisé en ce que le circuit de déclenchement (24) est doté d'un détecteur différentiel (40) associé à un relais (44) à haute sensibilité, dont la palette est verrouillée par le mécanisme (22) dans l'état armé, la mise en service du parafoudre (10) s'opérant après raccordement des bornes (26,28,30), par déplacement de la manette (46) de la position de déclenchement vers la position d'enclenchement, provoquant le déverrouillage de ladite palette du relais (44), lequel est alors prêt à intervenir en cas d'excitation de sa bobine de commande.

3. Parafoudre selon la revendication 1 ou 2, caractérisé en ce que l'une des pièces de transmission du mécanisme (22) est dépourvue de ressort de rappel pour empêcher le réarmement du mécanisme (22) suite à un déclenchement automatique.

4. Parafoudre selon la revendication 2 ou 3, caractérisé en ce que le capot (90) est agencé sur la face avant du boîtier (12) isolant, et comporte une lumière (92) de débattement de la manette (46), cette dernière étant engagée sous le capot (90) en position d'enclenchement pour interdire toute déconnexion manuelle du parafoudre (10) en l'absence de déclenchement par le relais (44).

5. Parafoudre selon la revendication 1, caractérisé en ce que le circuit de déclenchement (24) est équipé d'un déclencheur électromagnétique associé à un mécanisme (22) de disjoncteur, ledit déclencheur étant insensible aux décharges transitoires traversant le limiteur de surtension (14) en fonctionnement normal.

6. Parafoudre selon l'une des revendications 1 à 5, caractérisé en ce que les éléments non linéaires du limiteur de surtension (14) sont formés par des varistances.

## Patentansprüche

1. Überspannungsableiter mit Isolierstoffgehäuse (12), in dem ein Überspannungsbegrenzer (14) mit nicht linearen spannungsabhängigen Bauelementen, eine Trennvorrichtung (16) mit Kontakten (18, 20), die über einen zwischen einer Einschalt- und einer Ausgelöst-Stellung entsprechend der geöffneten bzw. geschlossenen Stellung der Kontakte (18, 20) verschwenkbaren Mechanismus (22) mit einem Kipphebel (46) betätigt werden, eine mit dem Mechanismus (22) zusammenwirkende Auslöseschaltung (24) zur Überführung der Kontakte (18, 20) der Trennvorrichtung (16) in die geöffnete Stellung bei Zerstörung des Überspannungsbegrenzers (14) durch Ablauf der Lebensdauer der genannten nichtlinearen Bauelemente sowie Klemmen (26, 28, 30) zum Anschluß des Überspannungsableiters (10) zwischen Netz und Erde montiert sind, wobei die Rückstellung des Mechanismus' (22) nach einer durch eine automatische Auslösung bedingten Trennung des Überspannungsableiters (10) verhindert wird, dadurch gekennzeichnet, daß der Kipphebel (46) so mit einer Abdeckung (90) zusammenwirkt, daß er in der Ausgelöst-Stellung zugänglich und in der Einschaltstellung unzugänglich ist, wodurch der Überspannungsableiter (10) mit gespanntem Mechanismus (22) und dem Kipphebel (46) in Ausgelöst-Stellung ausgeliefert werden kann, und daß der Mechanismus (22) Mittel zur Speicherung der automatischen Auslösung aufweist, die bei dem Versuch, den Mechanismus (22) mit Hilfe des Kipphebels (46) zu spannen, durch Halten der Kontakte (18, 20) in der geöffneten Stellung ein Rückgängigmachen der Trennung verhindern.

2. Überspannungsableiter nach Anspruch 1, dadurch gekennzeichnet, daß die Auslöseschaltung (24) einen Differenzstrom-Meßwandler (40) umfaßt, der einem Relais (44) mit hoher Ansprechempfindlichkeit zugeordnet ist, dessen Anker durch den Mechanismus (22) im gespannten Zustand verriegelt ist, wobei die Inbetriebnahme des Überspannungsableiters (10) nach Herstellung der Anschlußverbindungen an den Klemmen (26, 28, 30) durch Überführung des Kipphebels (46) von der Ausgelöst-Stellung in die Einschaltstellung erfolgt, wodurch der genannte Anker des Relais (44) entriegelt wird, so daß dieses bei Erregung seiner Spule wirksam werden kann.

3. Überspannungsableiter nach Anspruch 1 oder 2, dadurch gekennzeichnet, daß eines der Übertragungselemente des Mechanismus (22) keine Rückholfeder aufweist, um eine Rückstellung des Mechanismus' nach erfolgter automatischer Auslösung zu verhindern.

4. Überspannungsableiter nach Anspruch 2 oder 3, dadurch gekennzeichnet, daß die Abdeckung (90) an der Frontseite des Isolierstoffgehäuses (12) angebracht ist und eine Aussparung (92) zum Verschwenken des Kipphebels (46) aufweist, der in der Einschaltstellung unter die Abdeckung (90) ragt, um so jede manuelle, nicht durch die Auslösung des Relais (44) bewirkte Trennung des Überspannungsableiters (10) zu verhindern.

5. Überspannungsableiter nach Anspruch 1, dadurch gekennzeichnet, daß die Auslöseschaltung (24) einen elektromagnetischen Auslöser umfaßt, der mit einem Schaltmechanismus (22) eines Leistungsschalters zusammenwirkt und gegen transiente Entladungen, die über den Überspannungsbegrenzer 14 abgeleitet werden, unempfindlich ist.

6. Überspannungsableiter nach einem der Ansprüche 1 bis 5, dadurch gekennzeichnet, daß die nicht linearen Bauelemente des Überspannungsbegrenzers (14) als Varistoren ausgeführt sind.

## Claims

1. A surge arrestor housed in an insulating case (12) containing a voltage surge limiter (14) with non-linear elements variable with the voltage, a disconnecting device (16) with contacts (18, 20) actuated by a mechanism (22) with a handle (46) which can be moved between a tripped position and a closed position corresponding respectively to the open state and the closed state of the contacts (18, 20), a tripping circuit (24) cooperating with the mechanism (22) to bring about movement of the contacts (18, 20) of the disconnection device (16) to the open state in the event of destruction of the voltage surge limiter (14) at the end of the lifetime of said non-linear elements, and terminals (26, 28, 30) for connection of the surge arrestor (10) between the power system and earth, recharging of the mechanism (22) being inhibited after the surge arrestor (10) has been disconnected following an automatic trip, characterized in that the handle (46) cooperates with a cover (90) so as to be accessible in the tripped position and inaccessible in the closed position, enabling the surge arrestor (10) to be delivered in the charged state of the mechanism (22) and in the tripped position of the handle (46), and that the mechanism (22) comprises means for storing automatic tripping making disconnection irreversible by keeping the contacts (18, 20) in the open state in the event of an attempt to recharge the mechanism (22) via the handle (46).

2. The surge arrestor according to claim 1, characterized in that the tripping circuit (24) is provided with a differential detector (40) associated with a high-sensitivity relay (44), whose blade is locked by the mechanism (22) in the charged state, commissioning of the surge arrestor (10) taking place after connection of the terminals (26, 28, 30), by moving the handle (46) from the tripped position to the closed position, causing unlocking of said blade of the relay (44), which is then ready to operate in case of excitation of its operating coil.

3. The surge arrestor according to claim 1 or 2, characterized in that one of the transmission parts of the mechanism (22) is not provided with a return spring to prevent recharging of the mechanism (22) following automatic tripping.

4. The surge arrestor according to claim 2 or 3, characterized in that the cover (90) is arranged on the front panel of the insulating case (12), and comprises an aperture (92) for movement of the handle (46) the latter being engaged under the cover (90) in the closed position to prevent any manual disconnection of the surge arrestor (10) in the absence of tripping by the relay (44).

5. The surge arrestor according to claim 1, characterized in that the tripping circuit (24) is equipped with an electromagnetic trip device associated with a circuit breaker mechanism (22), said trip device being insensitive to transient discharges flowing through the voltage surge limiter (14) in normal operation.

6. The surge arrestor according to one of the claims 1 to 5, characterized in that the non-linear elements of the voltage surge limiter (14) are formed by variable resistances.
